# EUROPÄISCHE PATENTSCHRIFT

(11) **EP 1 769 945 B1**
(45) Veröffentlichungstag und Bekanntmachung des Hinweises auf die Patenterteilung: **14.11.2012**
(21) Anmeldenummer: 06120618.1
(22) Anmeldetag: 14.09.2006
(51) Int. Cl.: B29D 30/70, B60C 9/22, B60C 9/30

(54) **Fahrzeugluftreifen und Verfahren zum Herstellen eines Fahrzeugluftreifens**
Pneumatic tire and method for manufacturing same
Pneumatique et procédé de fabrication celui

(30) Priorität: 01.10.2005 DE 102005047222
(43) Veröffentlichungstag der Anmeldung: 04.04.2007
(73) Patentinhaber: Continental Reifen Deutschland GmbH, 30165 Hannover (DE)
(72) Erfinder: Winkler, Jens, 30900 Wedemark (DE); Geffert, Ulrich, 31848 Bad Münder (DE); Mauruschat, Rainer, 30826 Garbsen (DE); Seevers, Jörn, 31303 Burgdorf (DE)
(74) Vertreter: Finger, Karsten

(56) Entgegenhaltungen:
- EP-A2- 0 256 794
- DE-A1- 4 205 058
- DE-A1- 19 941 340
- US-A- 5 620 538
- US-A- 5 975 176

## Beschreibung

Die Erfindung betrifft ein Verfahren zum Herstellen eines Fahrzeugluftreifens mit einem Laufstreifen, einer Radialkarkasse, Wulstkernen mit Kernprofilen, Seitenwänden, einem insbesondere zweilagigen Gürtel und einer die radial äußerste Gürtellage abdeckenden, spiralig gewickelten Gürtelbandage mit im Wesentlichen in Umfangsrichtung und zueinander parallel verlaufenden Festigkeitstragern, wobei der fertig aufgebaute Rohreifett in einer Vulkanisationsform unter Innendruck eingeformt und vulkanisiert wird, wobei die Vulkanisationsform dem Reifen im Bereich des Laufstreifens und des Gürtels eine zur Reifenäquatorebene symmetrische und über die Breite dieser Bauteile einheitliche, leicht gerundete Kontur vermittelt

Aus der EP-B 0 319 588 sind ein Verfahren und eine Vorrichtung zur Herstellung eines Radialreifens bekannt, bei dem auf die äußere Oberfläche des aufgebauten Gürtels kontinuierlich und spiralig in Umfangsrichtung umlaufen zumindest ein organischer Faserkord gewickelt wird, um eine Bandage zur Verstärkung des Gürtels zu bilden. Dabei kann auch eine Vielzahl von parallel zueinander verlaufenden Korden in Gummi eingebettet sein und derart einen Bandagestreifen bilden. Während des spiraligen Wickelns kann die angelegte Spannung so geändert werden, dass sie im zentralen Bereich des Reifens ein Minimum und in den Schulterbereichen des Reifens ein Maximum ist. Bei einer anderen Ausführungsvariante wird die angelegte Spannung konstant gehalten, wobei die Bandage auf Gürtellagen gewickelt wird, die von ihrer Kontur her bereits gemäß ihrer Kontur im fertigen Reifen geformt sind.

Aus der DE-A 42 05 058 ist es bekannt, eine Gürtelbandage aus einem oder mehreren Streifen zu bilden, die zwischen der inneren Reifenschulter und der äußeren Reifenschulter zumindest zum Teil schindelförmig überlappend und insbesondere in Form von Windungen angeordnet sind. Die Überlappungsbreite der Streifen ist dabei im Bereich der inneren Reifenschulter größer als im Bereich der äußeren Reifenschulter. Damit soll ein positiver Konuseffekt ohne Beeinträchtigung der Schnelllaufleistung erreicht werden. Von diesem Dokument läßt sich ein Verfahren zur Reifenherstellung gemäß dem Oberbegriff des Anspruchs 1 ableiten.

Aus der US-A-5,975,176 ist ein Fahrzeugluftreifen bekannt, welcher bei einer im Wesentlichen konstanten Querschnittsbreite über dem Bereich des Laufstreifens und einer im Wesentlichen konstanten Profiltiefe eine Seitenwand aufweist, die bei montiertem Fahrzeugluftreifen an der Fahrzeugaußenseite liegt und deren Höhe größer ist als jene der anderen Seitenwand, die dem Fahrzeug zugekehrt ist. Auch der aus der US-A-5,620,538 bekannte Fahrzeugluftreifen ist bezüglich der Reifenäquatorebene asymmetrisch, indem der äußere Durchmesser der Laufstreifenoberfläche des Laufstreifens im fahrzeugäußeren Bereich größer ist als jener im fahrzeuginneren Bereich. Dieser Fahrzeugluftreifen ist dafür vorgegehen, an Fahrzeugen, die auf oval angeordneten Rennkursen gefahren werden, als Rennreifen eingesetzt werden.

Die sich in Abhängigkeit von der Rotationsgeschwindigkeit und dem Aufbau des Reifens unter den auf ihn wirkenden Zentrifugalkräften einstellende dynamische Kontur ist im Durchmesser größer als die Kontur des ruhenden Reifens, wobei das Wachstum im Laufstreifenmittelbereich meist größer ist als in den Seitenbereichen. Bei herkömmlich aufgebauten Reifen ist das dynamische Wachstum des Reifens mit einer Verringerung der Breite und einer Vergrößerung der Länge der Bodenaufstandsfläche verbunden. Dadurch nimmt die axiale Steifigkeit des Reifens ab. Für Handling, Antrieb und das Bremsverhalten wäre es von Vorteil, wenn sich die Bodenaufstandsfläche während des dynamischen Wachstums des Reifens möglichst wenig verschmälert.

Der Erfindung liegt die Aufgabe zugrunde, einen Reifen derart herzustellen, dass sich seine Bodenaufstandsfläche bei zunehmender Geschwindigkeit nicht nachteilig verändert.

Diese Aufgabe wird gemäß der Erfindung dadurch gelöst, dass die Gürtellagen während des Reifenaufbaus eine Kontur erhalten, die im Querschnitt gegenüber der axialen Richtung leicht geneigt verläuft, sodass im Rohreifen der Durchmesser des Gürtels bei der einen Schulter geringer ist als bei der anderen Schulter, wobei die Bandage auf den derart konturierten Gürtel aufgebracht wird, der Reifen anschließend fertig aufgebaut und vulkanisiert wird.

Gemäß der Erfindung weist der Rohreifen im Laufstreifen und Gürtelbereich eine "geneigt" verlaufende Kontur auf, die beim Vulkanisieren, beim Einformen des Reifens in die Vulkanisationsform, in die übliche, zur Äquatorebene symmetrische und insgesamt insbesondere leicht gerundete Kontur überführt wird. Die Bandage unterliegt daher beim Einformen in die Vulkanisationsform einer in Richtung geringerem Durchmesser zunehmenden Dehnung und Spannung. Im Bereich der gröBer vorgespannten Bandage ist daher das Umfangswachstum des Reifens bei hohen Geschwindigkeiten geringer als im Bereich mit weniger vorgespannter Bandage. Der Bereich mit der höher vorgespannten Bandage wird bevorzugt dem Innenbereich des Reifens zugeordnet, also jenem Bereich, der bei montiertem Reifen der Fahrzeuglängsachse zugekehrt ist, Der fertige Reifen zeigt ein kontrollierbares und über seine Breite selektives dynamisches Wachstum, welches durch die Auslegung der "Neigung" des Gürtels im Rohreifen entsprechend gesteuert werden kann. Erfindungsgemäß hergestellte Reifen können daher auch hinsichtlich bestimmter Eigenschaften, beispielsweise Handling und Bremsverhalten, gegenüber herkömmlich hergestellten Reifen verbessert sein.

Der Reifen wird dabei bevorzugt derart aufgebaut bzw. ausgelegt, dass die Kontur der Einhüllenden des Laufstreifens bei dynamischem Wachstum im Querschnitt über einen Großteil ihrer axialen Erstreckung zumindest annähernd eine Gerade ist. Dadurch bleibt die Bodenaufstandsfläche des Reifens auch bei dynamischem Wachstum in Folge hoher Geschwindigkeit vergleichsweise breit.

Im Reifen selbst ist die Bandage im Innenbereich stärker vorgespannt als im Außenbereich und die Vorspannung der Bandage nimmt von der Innenschulter zur Außenschulter vorzugsweise zu kontinuierlich ab. Damit stellt sich die erwünschte geneigte Kontur bei dynamischem Wachstum des Reifens ein.

Zurückzuführen ist das besondere dynamische Wachstum, wie bereits oben ausgeführt, auf die besondere Konturierung der Gürtellagen während des Reifenaufbaus. Eine gewisse Beeinflussung des dynamischen Wachstums ist nun dadurch möglich, dass die Bandage entweder über die Gürtelbreite mit konstanter Spannung aufgebracht wird oder dadurch, dass die Bandage derart aufgebracht wird, dass sich ihre Spannung von der Schulter im späteren Innenbereich ausgehend bis zur Schulter im späteren Außenbereich insbesondere kontinuierlich verringert. Alternativ oder zusätzlich zu dieser Maßnahme kann ferner die Bandage derart auf den konturierten Gürtel aufgebracht werden, dass ihre Wicklungsdichte bei der oder zur Schulter des späteren Innenbereiches zu größer ist.

Bei erfindungsgemäß ausgeführten Reifen kommen bei hohen Fahrzeuggeschwindigkeiten Laufstreifenbereiche mit dem Untergrund im Kontakt, die bei üblichen Reifen nicht mehr oder nicht im gleichen Ausmaß mit dem Untergrund in Kontakt kommen. Dadurch kann bei erfindungsgemäßen Reifen gezielt Einfluss auf bestimmte Reifeneigenschaften genommen werden, einerseits durch den Einsatz unterschiedlicher Gummimischungen im Laufstreifen und andererseits durch die Auslegung des Laufstreifenprofils. Der Laufstreifen wird daher insbesondere derart ausgeführt, dass er aus zumindest zwei in Umfangsrichtung umlaufenden Bereichen besteht, die aus unterschiedlichen Gummimischungen bestehen und/oder unterschiedliche Profilstrukturen aufweisen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 schematisch einen Querschnitt durch die eine Hälfte eines Fahrzeugluftreifens und
Fig. 2 schematisch und im Querschnitt einen auf einer konturierten Gürteltrommel aufgebrachten Gürtel.
Fig. 3 verdeutlicht das dynamische Wachstum eines Reifens bei unterschiedlichen Geschwindigkeiten.

Vorab wird darauf verwiesen, dass unter dem Begriff "Geschwindigkeit" die Fahrzeuggeschwindigkeit (Fahrzeug mit erfindungsgemäß ausgeführten Reifen) zu verstehen ist.

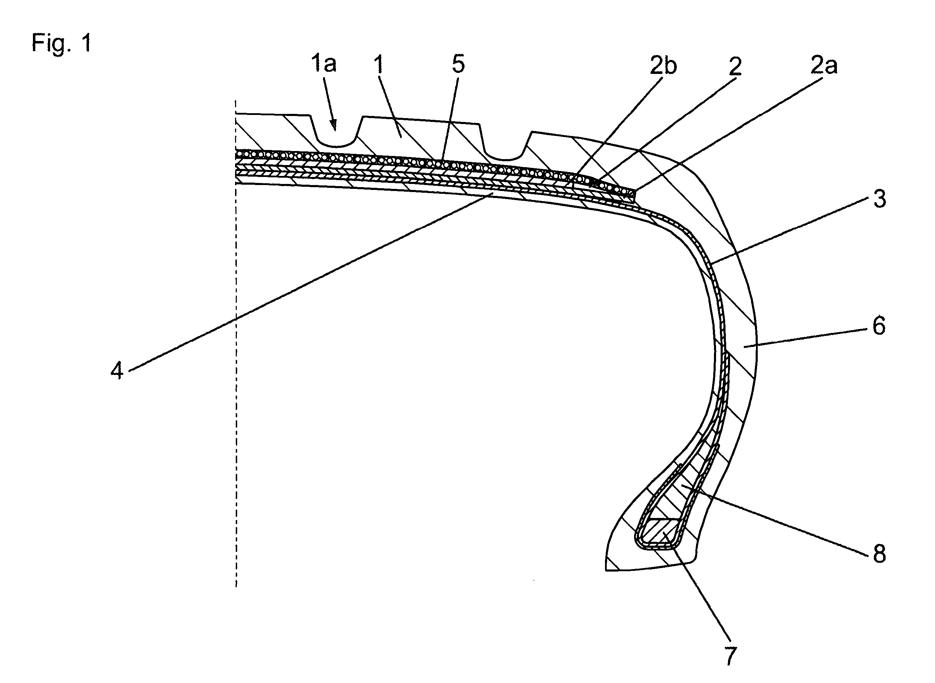

Der in Fig. 1 gezeigte Fahrzeugluftreifen für Personenkraftwagen weist einen profilierten Laufstreifen 1, einen hier aus zwei Lagen 2a, 2b bestehenden Gürtel 2, eine in der dargestellten Ausführungsform einlagig ausgeführte Radialkarkasse 3, eine luftdicht ausgeführte Innenschicht 4, zwei Seitenwände 6 sowie Wulstbereiche mit Wulstkernen 7 und Kernprofilen 8 auf. Die beiden Gürtellagen 2a, 2b bestehen vorzugsweise aus in eine Gummimischung eingebetteten Festigkeitsträgern, insbesondere Stahlkorden, wobei die Festigkeitsträger in diesen beiden Gürtellagen 2a, 2b einander kreuzen. Die in jeder Lage parallel zueinander verlaufenden Stahlkorde schließen mit der Umfangsrichtung des Reifens einen spitzen Winkel in der Größenordnung von 15 bis 40° ein. Die Profilierung des Laufstreifens 1 ist durch bezüglich der Äquatorebene symmetrisch verlaufende Umfangsrillen 1a angedeutet.

Der Gürtel 2 ist mit einer Bandage 5 abgedeckt, welche, wie es ebenfalls üblich ist, als Spulbandage ausgeführt ist. Die Bandage 5 besteht daher insbesondere aus einem oder mehreren Bandagestreifen, welcher bzw. welche jeweils aus in eine Gummimischung eingebetteten, in Längsrichtung des Streifens verlaufenden, textilen oder metallischen Festigkeitsträgern besteht bzw. bestehen. Der Bandagestreifen weist pro cm Streifenbreite insbesondere 7 bis 12 Fäden auf und besitzt eine Breite von 5 mm bis 15 mm. Die Bandage 5 wird durch spiraliges Wickeln des oder der Streifen auf die beiden Gürtellagen 2a, 2b während des Aufbaus des Reifens aufgebracht.

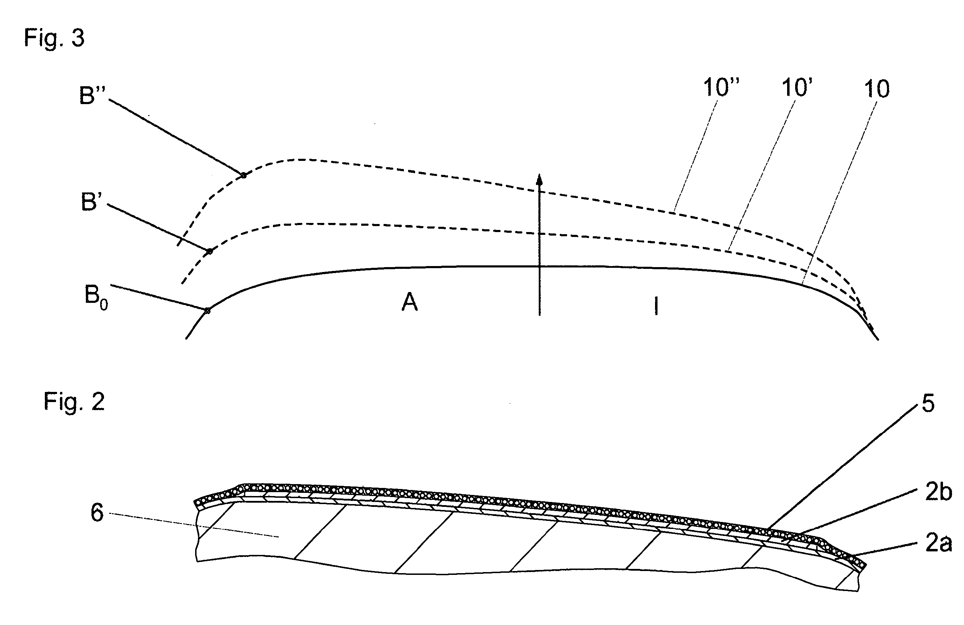

Fig. 3 zeigt die Einhüllende 10 des Laufstreifens des Reifens aus Fig. 1 sowie mit strichlierten Linien 10', 10" das dynamische Wachstum bei zunehmender Geschwindigkeit. 10' verdeutlicht die Kontur der Einhüllenden bei einer Geschwindigkeit v₁, 10" die Kontur der Einhüllenden bei einer Geschwindigkeit v₂ , die größer als v₁ ist. Mit I ist der Innenbereich des Laufstreifens 1, mit A ist der Außenbereich des Laufstreifens 1 bezeichnet, wobei diese Bereiche bei der dargestellten Ausführung mit den Laufstreifenhälften übereinstimmen. Der Innenbereich I ist jener, der bei montiertem Reifen der Fahrzeuglängsachse zugewandt ist. Ein erfindungsgemäßer Reifen ist daher ein "asymmetrisch" ausgeführter Reifen, welcher in der erwähnten Position am Fahrzeug zu montieren ist. Das dynamische Wachstum des Reifens ist derart, dass er zur Außenschulter im Außenbereich A zu stärker wächst, das heißt, dass sich mit zunehmender Geschwindigkeit sein Durchmesser an der Außenschulter mehr vergrößert, als an der Innenschulter im Innenbereich I. Im Bereich dazwischen vergrößert sich der Außendurchmesser von der Innenschulter im Innenbereich I zur Außenschulter im Außenbereich A des Reifens zumindest im Wesentlichen kontinuierlich. Die Neigung der strichlierten Linien 10', 10" relativ zur Ausgangskontur verdeutlicht diesen Sachverhalt. Dieses spezielle dynamische Wachstum hat unmittelbar Auswirkungen auf die Form und die Größe der Bodenaufstandsfläche des Reifens. Diese bleibt nahezu unverändert breit, wird in Abrollrichtung kaum länger und mit zunehmender Geschwindigkeit annähernd rechteckig. Je nach Geschwindigkeit kann die Differenz im Außendurchmesser zwischen Innen- und Außenschulter 0,5 bis 5 % betragen. B₀ kennzeichnet den Rand der Bodeaufstandsfläche im Außenbereich A bei ruhendem Reifen, B' bei der Geschwindigkeit v₁ und B" bei der Geschwindigkeit v₂.

Wie es Fig. 2 zeigt wird der Gürtel - Gürtellagen 2a, 2b mit Bandage 5 - bei der Herstellung des Reifens besonders konturiert und mit dieser Kontur im Rohreifen eingebaut. Die Kontur des Gürtels 2 bzw. der entlang seiner Außenseite aufgebrachten Bandage 5 ist im Querschnitt geneigt, insbesondere entlang einer Geraden oder einer leicht gebogenen Kurve, derart, dass der Gürtel 2 nahe der einen Schulter, der späteren Außenschulter, einen größeren Durchmesser aufweist als nahe der anderen Schulter, der späteren Innenschulter. Die Differenz beträgt etwa 2 %.

Ein derart konturierter Gürtel kann gemäß dem in einer deutschen Patentanmeldung des Anmelders beschriebenen Verfahren und mit der dort beschriebenen Vorrichtung hergestellt werden. Dabei werden die Gürtellagen 2a, 2b zunächst auf einer expandierbaren zylindrischen Gürteltrommel zylindrisch aufgebaut und gespleißt und mittels einer Transfereinrichtung auf eine zweite, außenseitig entsprechend der erwünschten Kontur des Gürtels ausgeführten Gürteltrommel 6 transferiert und hier beispielsweise durch örtliche Dehnung und/oder Stauchung konturiert. Fig. 2 zeigt schematisch einen Teil einer derart konturiert ausgeführten Gürteltrommel 6. Die Verformung der Gürtellagen 2a, 2b kann beispielsweise durch Expansion der Gürteltrommel 6 und durch eine gleichzeitig von außen auf die Gürtellagen 2a, 2b wirkende Einrichtung erfolgen. Diese Einrichtung kann beispielsweise eine mit Luft befüllbare Manschette aufweisen, deren den Gürtellagen 2a, 2b zugewandte Innenseite im aufgeblähten Zustand die erwünschte Außenkontur annimmt. Anschließend wird auf den konturierten Gürtel 2 die Bandage 5 durch spiraliges Wickeln eines Bandagestreifens aufgebracht. Dabei kann die Bandage 5 mit einer konstanten Aufzugsspannung, bezogen auf die Reifenbreite, erstellt werden. Alternativ dazu ist es möglich, eine ein- oder mehrlagige Bandage aus einem oder mehreren Bandagestreifen mit einer über die Gürtel- bzw. Reifenbreite variierenden Spulspannung aufzubringen. Es von Vorteil, wenn im späteren Innenbereich des Laufstreifens die Bandage mit einer höheren Spulspannung aufgebracht wird als im späteren Außenbereich. Dabei kann die Spulspannung von der Schulter im Innenbereich bis zur Schulter im Außenbereich kontinuierlich oder auch sprunghaft vermindert werden. Als alternative Maßnahme kann eine höhere Spuldichte im Innenbereich gewählt werden als im Außenbereich. Eine weitere zusätzliche oder auch alternative Maßnahme besteht darin, am späteren Innenbereich des Reifens ein Spulmaterial zu verwenden, welches hochmodulige Festigkeitsträger, etwa aus Stahl, aufweist.

Der mit einer erfindungsgemäßen Kontur im Gürtelbereich und daher auch im Laufstreifenbereich gefertigte Rohreifen wird in einer herkömmlichen Vulkanisationsform, die dem Reifen eine der üblichen abgerundeten Konturen im Laufstreifenbereich verleiht, vulkanisiert. Dabei wird der Reifen von innen her über einen mit einem Heizmedium befüllten Balg unter Druck in die Segmente der Vulkanisationsform gepresst und eingeformt. Der Einformvorgang bedingt dabei eine gewisse Ausdehnung des Rohreifens im Gürtel- und Laufstreifenbereich, die als Resterhebung bezeichnet wird. Gleichzeitig verformt sich der Reifen derart, dass die Neigung in der Kontur des Gürtels, der Bandage und des Laufstreifens verschwindet und in die übliche und durch die Formsegmente vorgegebene Kontur überführt wird. Die Dehnung der Bandage 5 ist daher im Bereich mit dem ursprünglich geringeren Durchmesser größer als im Bereich mit dem ursprünglich größeren Durchmesser. Als Folge dieser unterschiedlichen Vorspannung der Bandage 5 stellt sich das bereits beschriebene und in Fig. 3 verdeutlichtes dynamische Wachstum des fertigen Reifens bei hohen Geschwindigkeiten ein.

Die dynamische Kontur eines Reifens wird auf einem Prüfstand, auf welchem der auf die Felge aufgezogene und unter Innendruck gesetzte Reifen in Rotation versetzt wird, ermittelt. Die jeweilige dynamische Kontur bei einer bestimmten Geschwindigkeit kann durch Abtasten der Außenfläche des Reifens, beispielsweise mittels eines Lasers, festgestellt, in einem geeigneten Rechnerprogramm abgespeichert und entsprechend ausgewertet werden.

Die Erfindung ist auf das dargestellte Ausführungsbeispiel nicht eingeschränkt. So ist es beispielsweise möglich, anstelle von Bandagestreifen einen oder mehrere gummierte Einzelkorde zu verwenden, welcher bzw. welche kontinuierlich und spiralig in Reifenumfangsrichtung um den Gürtel gewickelt wird bzw. werden. Des weiteren kann über im Laufstreifen eingesetzte Gummimischungen und die Laufstreifenprofilierung auf bestimmte Eigenschaften des Reifens bei zunehmender Geschwindigkeit Einfluss genommen werden. Der Laufstreifen kann aus zumindest zwei Umfangsbereichen gleicher oder unterschiedlicher Breite bestehen, welche aus unterschiedlichen Gummimischungen hergestellt sind. So kann beispielsweise der Innenbereich des Laufstreifens aus einer Mischung mit geringem Wärmeaufbau oder aus einer abriebbeständige Mischung bestehen. Im Außenbereich kann eine Gummimischung eingesetzt werden, die das Bremsverhalten auf nassem Untergrund positiv beeinflusst. Der Laufstreifen kann ferner zumindest aus zwei Umfangsbereichen mit unterschiedlichen Profilstrukturen bestehen. Die Profilstrukturen des Laufstreifens im Außenbereich können derart ausgeführt sein, dass ein besonders gutes Wasserableitvermögen zur Außenseite sicher gestellt ist. Ein erfindungsgemäßer Reifen kann daher derart ausgelegt werden, dass er besonders für hohe Geschwindigkeiten unter nassen Fahrbedingungen geeignet ist.

## Patentansprüche

1. Verfahren zum Herstellen eines Fahrzeugluftreifens mit einem Laufstreifen, einer Radialkarkasse (3), Wulstkernen (7) mit Kernprofilen (8), Seitenwänden (6), einem insbesondere zweilagigen Gürtel (2) und einer die radial äußerste Gürtellage (2b) abdeckenden, spiralig gewickelten Gürtelbandage (S) mit im Wesentlichen in Umfangsrichtung und zueinander parallel verlaufenden Festigkeitsträgern, wobei der fertig aufgebaute Rohreifen in einer Vulkanisationsform unter Innendruck eingeformt und vulkanisiert wird, wobei die Vulkanisationsfoan dem Reifen im Bereich des Laufstreifens (1) und des Gürtels (2) eine zur Reifenäquatorebene symmetrische und über die Breite dieser Bauteile einheitliche leicht gerundete Kontur vermittelt,
**dadurch gekennzeichnet,**
**dass** die Gürtellagen (2a, 2b) während des Reifenaufbaus eine Kontur erhalten, die im Querschnitt gegenüber der axialen Richtung leicht geneigt verläuft, sodass im Rohreifen der Durchmesser des Gürtels (2) bei der einen Schulter geringer ist als bei der anderen Schulter, wobei die Bandage (5) auf den derart konturierten Gürtel (2) aufgebracht wird, der Reifen anschließend fertig aufgebaut und vulkanisiert wird,

2. Verfahren nach Anspruch 2, **dadurch gekennzeichnet, dass** die Bandage (5) über die Gürtelbreite mit konstanter Spannung aufgebracht wird.

3. Verfahren nach Anspruch 2, **dadurch gekennzeichnet, dass** die Bandage (5) derart aufgebracht wird, dass sich ihre Spannung von der Schulter im späteren Innenbereich (I) ausgehend bis zur Schulter im späteren Außenbereich (A) insbesondere kontinuierlich verringert.

4. Verfahren nach einem der Ansprüchen 1 bis 3, **dadurch gekennzeichnet, dass** die Wicklungsdichte der Bandage (5) bei der oder zur Schulter des späteren Innenbereiches (I) zu größer wird.

5. Fahrzeugluftreifen, welcher nach dem Verfahren gemäß einem oder mehreren der Ansprüche 1 bis 4 hergestellt ist.

## Claims

1. Method for manufacturing a pneumatic vehicle tyre with a tread rubber, a radial carcass (3), bead cores (7) with bead fillers (8), sidewalls (6), a breaker belt (2), in particular comprising two plies, and a spirally wound belt bandage (5), which covers the radially outermost belt ply (2b) and has reinforcing elements running substantially in the circumferential direction and parallel to one another, the completely built green tyre being moulded into a vulcanizing mould under internal pressure and vulcanized, the vulcanizing mould imparting to the tyre in the region of the tread rubber (1) and the breaker belt (2) a slightly rounded contour that is symmetrical to the equatorial plane of the tyre and uniform over the width of these components, **characterized in that**, during the building of the tyre, the belt plies (2a, 2b) are given a contour which runs slightly inclined in cross section with respect to the axial direction, so that in the green tyre the diameter of the breaker belt (2) is less at one shoulder than at the other shoulder, the bandage (5) being applied to the breaker belt (2) contoured in this way, the building of the tyre then completed and the tyre vulcanized.

2. Method according to Claim 1, **characterized in that** the bandage (5) is applied with a tension that is constant over the belt width.

3. Method according to Claim 2, **characterized in that** the bandage (5) is applied in such a way that its tension decreases, in particular continuously, from the shoulder in what is later the inner region (I) to the shoulder in what is later the outer region (A).

4. Method according to one of Claims 1 to 3, **characterized in that** the winding density of the bandage (5) becomes greater at the or towards the shoulder of what is later the inner region (I).

5. Pneumatic vehicle tyre manufactured by the method according to one or more of Claims 1 to 4.

## Revendications

1. Procédé de fabrication d'un bandage pneumatique pour roue de véhicule, le bandage comprenant une bande roulement, une carcasse radiale (3), des bourrelets d'âme (7) dotés de profils d'âme (8), des parois latérales (6), une ceinture (2) en particulier en deux couches et un bandage de ceinture (5) enroulé en spirale, recouvrant la couche de ceinture (2b) située à l'extérieur dans la direction radiale et doté de renforts qui s'étendent essentiellement dans la direction périphérique et qui sont parallèles les uns aux autres,
le bandage de roue brut ainsi formé étant moulé et vulcanisé dans un moule de vulcanisation placé sous pression intérieure,
le moule de vulcanisation donnant à la totalité de la largeur de la bande de roulement (1) et de la ceinture (2) du bandage de roue un contour légèrement arrondi et symétrique par rapport à l'équateur du bandage de roue,
**caractérisé en ce que**
pendant la formation du bandage de roue, les couches de ceinture (2a, 2b) reçoivent un contour dont la coupe transversale est légèrement oblique par rapport à la direction axiale de telle sorte que sur un épaulement du bandage de roue brut, le diamètre de la ceinture (2) soit plus petit que sur l'autre épaulement et
**en ce que** le bandage (5) est appliqué sur la ceinture (2) dotée de ce contour et
**en ce que** le bandage de roue reçoit ensuite sa finition et est vulcanisé.

2. Procédé selon la revendication 1, **caractérisé en ce que** le bandage (5) est appliqué avec une contrainte constante sur la largeur de la ceinture.

3. Procédé selon la revendication 2, **caractérisé en ce que** le bandage (5) est appliqué de telle sorte que sa contrainte diminue notamment de manière continue entre l'épaulement situé dans la partie (I) qui sera ultérieurement située à l'intérieur et la partie (A) qui sera ultérieurement située à l'extérieur.

4. Procédé selon l'une des revendications 1 à 3, **caractérisé en ce que** la densité d'enroulement du bandage (5) augmente sur ou vers l'épaulement de la partie (I) qui sera ultérieurement située à l'intérieur.

5. Bandage pneumatique pour roue de véhicule fabriqué à l'aide du procédé selon l'une ou plusieurs des revendications 1 à 4.
